# EUROPÄISCHE PATENTSCHRIFT

(11) **EP 3 337 997 B1**
(45) Veröffentlichungstag und Bekanntmachung des Hinweises auf die Patenterteilung: **30.10.2019**
(21) Anmeldenummer: 16770438.6
(22) Anmeldetag: 10.08.2016
(51) Int. Cl.: F16D 21/06, H02K 7/108

(54) **KUPPLUNGSEINRICHTUNG FÜR HYBRIDANTRIEB**
CLUTCH DEVICE FOR A HYBRID DRIVE SYSTEM
DISPOSITIF D'EMBRAYAGE POUR MOTORISATION HYBRIDE

(30) Priorität: 20.08.2015 DE 102015215874
(43) Veröffentlichungstag der Anmeldung: 27.06.2018
(73) Patentinhaber: Schaeffler Technologies AG & Co. KG, 91074 Herzogenaurach (DE)
(72) Erfinder: LORENZ, Elmar, 77836 Rheinmünster Söllingen (DE)
(86) Internationale Anmeldenummer: PCT/DE2016/200364
(87) Internationale Veröffentlichungsnummer: WO 2017/028854

(56) Entgegenhaltungen:
- EP-A1- 2 287 487
- EP-A1- 2 517 915
- DE-A1-102007 003 107
- US-A1- 2015 024 903

## Beschreibung

Die Erfindung betrifft eine Kupplungseinrichtung gemäß dem Oberbegriff des Anspruchs 1. Insbesondere betrifft die Erfindung eine Kupplungseinrichtung für einen Hybridantrieb.

Ein Kraftfahrzeug verfügt über einen ersten Antriebsmotor, der als elektrische Maschine ausgeführt ist, und einen zweiten Antriebsmotor, der als Verbrennungsmotor ausgeführt ist. Der Antrieb des Kraftfahrzeugs kann hybrid, also in einer beliebigen Kombination des ersten und/oder zweiten Antriebsmotors, erfolgen. Dazu ist zwischen den Antriebsmotoren und einem Getriebe des Kraftfahrzeugs eine Kupplungseinrichtung vorgesehen.

DE 10 2009 059 944 A1 betrifft eine Kupplungseinrichtung für ein hybrid antreibbares Kraftfahrzeug.

Aus jeder der EP2287487 A1, der DE 10 2007 003 107 A1, der US 2015/024 903 A1 und der EP 2 517 915 A1 ist jeweils eine Kupplungseinrichtung gemäß dem Oberbegriff des Anspruchs 1 bekannt.

Der Erfindung liegt die Aufgabe zu Grunde, weitere Varianten für die Gestaltung einer Kupplungseinrichtung anzugeben, die auch in einem Hybridantrieb verwendet werden kann. Die Erfindung löst diese Aufgabe mittels des Gegenstands des unabhängigen Anspruchs. Unteransprüche geben bevorzugte Ausführungsformen wieder.

Eine Kupplungseinrichtung umfasst eine erste und eine zweite Eingangsseite sowie eine erste und eine zweite Ausgangsseite, wobei die Eingangsseiten und die Ausgangsseiten um eine gemeinsame Drehachse drehbar sind. Ferner umfasst die Kupplungseinrichtung eine erste Kupplung zwischen der ersten Eingangsseite und der ersten Ausgangsseite und eine zweite Kupplung zwischen der ersten Eingangsseite und der zweiten Ausgangsseite. Zusätzlich ist eine dritte Kupplung zwischen der ersten Eingangsseite und der zweiten Eingangsseite vorgesehen.

Bevorzugt sind die erste und die zweite Kupplung zueinander axial versetzt. Dabei sind unterschiedliche Varianten denkbar, wie Betätigungsrichtungen für die erste und die zweite Kupplung zueinander stehen.

Die axialen Betätigungsrichtungen für die erste und die zweite Kupplung verlaufen auseinander oder verlaufen gleichgerichtet in eine von der dritten Kupplung entfernte Richtung.

Es ist bevorzugt, dass alle drei Kupplungen in einem gemeinsamen Gehäuse angeordnet sind, das teilweise mit einem flüssigen Medium gefüllt ist. Das flüssige Medium, insbesondere ein Öl, kann zur Kühlung, Reinigung und Schmierung von Kupplungskomponenten dienen.

Weiter ist bevorzugt, dass zur Betätigung der Kupplungen hydraulische Betätigungseinrichtungen vorgesehen sind. Wenigstens eine der Kupplungen wird bevorzugt hydraulisch betätigt. Die erste und die zweite Kupplung werden bevorzugt mittels des gleichen Prinzips betätigt, insbesondere beide hydraulisch. Die dritte Kupplung wird bevorzugt ebenfalls hydraulisch betätigt. Ein Betätigungsfluid einer hydraulischen Betätigungseinrichtung kann das flüssige Medium umfassen, mit dem das Gehäuse wenigstens teilweise gefüllt ist.

Die erste Eingangsseite kann zur Verbindung mit einem Läufer einer elektrischen Maschine eingerichtet sein. Insbesondere kann der Läufer radial außen von einem Ständer der elektrischen Maschine umgeben sein. Dadurch kann sich eine kompakte Antriebseinheit ergeben, die die Kupplungseinrichtung und die elektrische Maschine miteinander integriert.

Außerdem kann die zweite Eingangsseite zur Verbindung mit einer Abtriebswelle einer Brennkraftmaschine eingerichtet sein.

Die Erfindung wird nun mit Bezug auf die beigefügten Figuren genauer beschrieben, in denen:
- Fig. 1: eine exemplarische Kupplungseinrichtung;
- Fig. 2: eine schematische Darstellung von verschiedenen Ausführungsformen der Kupplungseinrichtung von Fig. 1 nach einer ersten Variante;
- Fig. 3: eine schematische Darstellung von verschiedenen Ausführungsformen der Kupplungseinrichtung von Fig. 1 nach einer zweiten Variante;
- Fig. 4: eine schematische Darstellung von verschiedenen Ausführungsformen der Kupplungseinrichtung von Fig. 1 nach einer dritten Variante; und
- Fig. 5: eine schematische Darstellung von verschiedenen Ausführungsformen der Kupplungseinrichtung von Fig. 1 nach einer vierten Variante
darstellt.

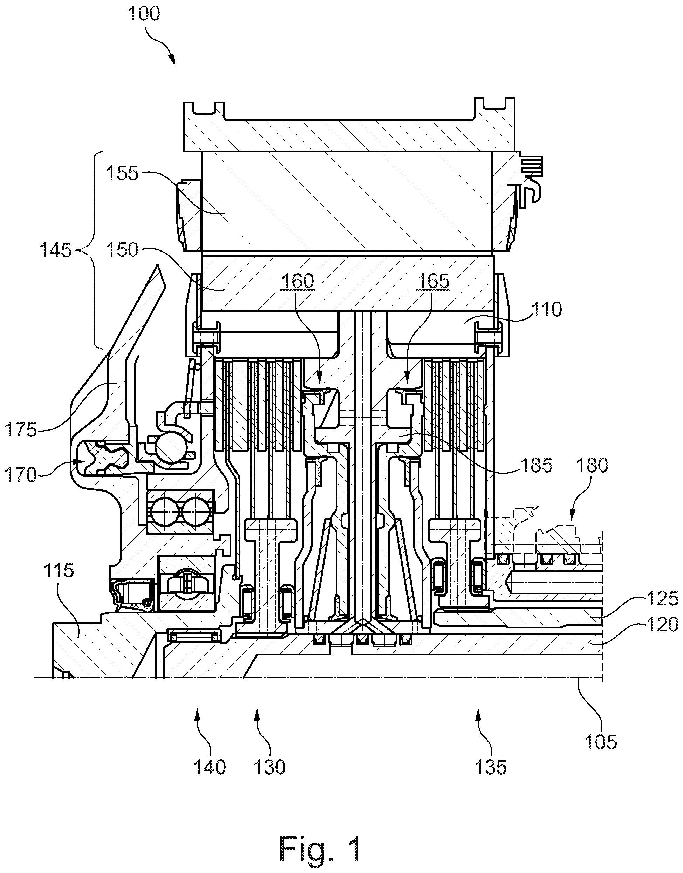

Figur 1 zeigt eine exemplarische Kupplungseinrichtung 100. Um eine Drehachse 105 sind eine erste Eingangsseite 110, eine zweite Eingangsseite 115, eine erste Ausgangsseite 120 und eine zweite Ausgangsseite 125 angeordnet.

Eine erste Kupplung 130 liegt zwischen der ersten Eingangsseite 110 und der ersten Ausgangsseite 120, eine zweite Kupplung 135 zwischen der ersten Eingangsseite 110 und der zweiten Ausgangsseite 125 und eine optionale dritte Kupplung 140 zwischen der ersten Eingangsseite 110 und der zweiten Eingangsseite 115. Die ersten beiden Kupplungen 130 und 135 sind radial oder bevorzugt axial zueinander versetzt und bilden eine axiale Doppelkupplung. Die dritte Kupplung 140 ist bevorzugt axial zu wenigstens einer der beiden anderen Kupplungen 130 und 135 versetzt.

Die erste Eingangsseite 110 ist zur Verbindung mit einer elektrischen Maschine 145 eingerichtet, die allgemein einen Läufer 150 und einen Ständer 155 umfasst. Bevorzugt ist die elektrische Maschine 145 vom Typ des Innenläufers, wobei der Läufer 150 radial innerhalb des Ständers 155 liegt. Dabei ist weiter bevorzugt, dass der Ständer 155 wenigstens eine Magnetspule und der Läufer 150 wenigstens einen Permanentmagneten aufweist. Der Läufer 150 liegt bevorzugt radial außerhalb der Kupplungen 130, 135 und 140 und ist in der dargestellten Ausführungsform mittels Nieten mit der ersten Eingangsseite 110 verbunden. Die zweite Eingangsseite 115 ist bevorzugt zur Verbindung mit einer Brennkraftmaschine, insbesondere einem Verbrennungsmotor, weiter bevorzugt einer Hubkolbenmaschine, eingerichtet.

Die Ausgangsseiten 120 und 125 sind zur Verbindung mit Eingangswellen eines Doppelgetriebes (nicht dargestellt) eingerichtet. Das Doppelgetriebe ist üblicherweise dazu eingerichtet, jede der Eingangswellen mittels eines anderen Gangradpaars mit einer gemeinsamen Ausgangswelle zu koppeln. Ist der Antriebsstrang in einem Kraftfahrzeug angeordnet, kann die Ausgangswelle letztlich auf ein Antriebsrad des Kraftfahrzeugs wirken. Um eine Gangstufe auszuwählen wird in der Regel eine der Kupplungen 130 oder 135 geschlossen, während die jeweils andere Kupplung 130, 135 geöffnet wird. Bevorzugt umfasst das Doppelgetriebe an jeder Getriebewelle mehrere Gangradpaare, die jeweils eine Gangstufe realisieren. Ein Gangradpaar kann üblicherweise ein- oder ausgelegt werden, wenn es mit einer Ausgangswelle 120, 125 verbunden ist, dessen zugeordnete Kupplung 130, 135 gerade geöffnet ist.

Die Kupplungseinrichtung 100 ist insbesondere dazu eingerichtet, im Antriebsstrang eines Kraftfahrzeugs eingesetzt zu werden. Dabei kann das Kraftfahrzeug bevorzugt hybrid angetrieben werden, also alternativ durch den Verbrennungsmotor, durch die elektrische Maschine 145 oder durch beide Antriebsmotoren. Soll der Verbrennungsmotor genutzt werden, so wird die dritte Kupplung 140 geschlossen. Soll die elektrische Maschine 145 genutzt werden, so wird sie üblicherweise elektrisch derart angesteuert, dass Drehmoment umgesetzt werden kann. Beide Antriebsmotoren können sowohl positives als auch negatives Drehmoment in den Antriebsstrang einbringen. Die elektrische Maschine 145 kann auch kinetische Energie aus dem Antriebsstrang aufnehmen und in elektrische Energie umwandeln, die beispielsweise in einem Energiespeicher temporär gespeichert werden kann. Durch ihren kompakten Aufbau eignet sich die Kupplungseinrichtung 100 insbesondere zum Einbau vorne quer in einem Kraftfahrzeug.

Der ersten Kupplung 130 ist eine erste Betätigungseinrichtung 160, der zweiten Kupplung 135 eine zweite Betätigungseinrichtung 165 und der dritten Kupplung 140 eine dritte Betätigungseinrichtung 170 zugeordnet. Bevorzugt arbeiten alle drei Betätigungseinrichtungen 160, 165 und 170 hydraulisch und sind jeweils dazu eingerichtet, eine axiale Betätigungskraft auf eine der Kupplungen 130, 135 und 140 auszuüben, sodass Reibelemente der Kupplungen 130, 135 oder 140 axial aneinander gepresst werden, um einen Reibschluss zu erzeugen und ein Drehmoment zwischen den Reibelementen zu übertragen. Bevorzugt werden die Reibelemente jeweils zwischen der zugeordneten Betätigungseinrichtung 160, 165, 170 und einem axialen Widerlager zusammengepresst. Weiterhin ist bevorzugt, dass die hydraulischen Betätigungseinrichtungen 160, 165 und 170 einzeln aktiv gesteuert werden können, indem etwa mittels eines Ventils oder eine Pumpe ein unter Druck stehendes Medium gezielt in einen hydraulischen Arbeitsraum der jeweiligen Betätigungseinrichtung 160, 165 oder 170 ein- oder aus ihm abgelassen wird. Alternativ dazu kann auch beispielsweise eine fliehölgesteuerte Betätigung vorgesehen sein.

Die drei Kupplungen 130, 135 und 140 sind bevorzugt in einem gemeinsamen Gehäuse 175 angeordnet, das wenigstens teilweise mit einem flüssigen Medium 180, insbesondere einem Öl, gefüllt sein kann. Das Medium 180 kann auch als Arbeitsmedium (hydraulisches Fluid) einer der Betätigungseinrichtungen 160, 165 und 170 verwendet werden. Die Kupplungen 130, 135 und 140 sind bevorzugt jeweils vom nasslaufenden Typ und können unabhängig voneinander als Einscheiben- oder Mehrscheibenkupplung ausgelegt sein. Weiter bevorzugt sind die erste Kupplung 130 und die zweite Kupplung 135 vom Mehrscheibentyp, um ein feinfühliges Öffnen und Schließen des Drehmomentflusses durch die Kupplungen 130, 135 zu erlauben. Die dritte Kupplung 140 kann auch wie dargestellt vom Einscheibentyp sein, wobei die dritte Kupplung 140 als Schaltkupplung ausgelegt sein kann, die möglichst nicht unter Schlupf betrieben wird.

In der dargestellten Ausführungsform befindet sich axial zwischen der ersten Kupplung 130 und der zweiten Kupplung 135 ein radialer Flansch 185 als Widerlager, gegen das die Kupplungen 130, 135 mittels der jeweils zugeordneten Betätigungseinrichtung 160, 165 gepresst werden können. Betätigungskräfte der Betätigungseinrichtungen 160, 165, 170 sind bevorzugt innerhalb der Kupplungseinrichtung 100 abgestützt, sodass keine resultierenden Kräfte nach außen abzustützen sind.

Soll die Kupplungseinrichtung 100 in einem Antriebsstrang ohne die elektrische Maschine 145 eingesetzt werden, kann die dritte Kupplung 140 auch entfallen. Die erste Eingangsseite 110 und die zweite Eingangsseite 115 fallen dann zusammen.

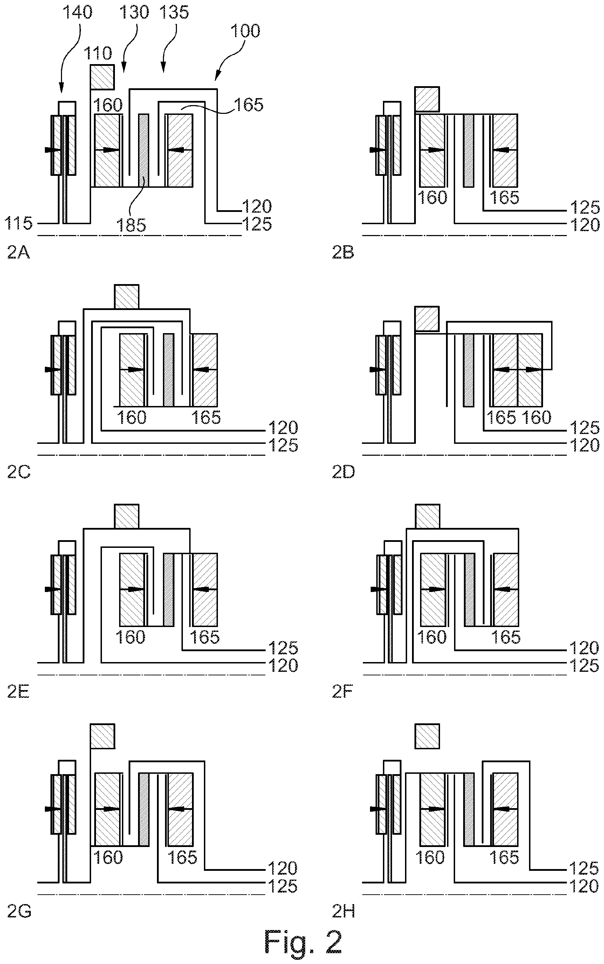

Figuren 2 bis 5 zeigen schematische Darstellungen unterschiedlicher Ausführungsformen der Kupplungseinrichtung 100 von Fig. 1. Dabei repräsentiert jeweils ein schraffiertes Rechteck mit einem axialen Pfeil eine Betätigungseinrichtung 160, 165 oder 170, wobei der Pfeil angibt, in welcher Richtung eine axiale Kraft aufgebracht wird, wenn die Betätigungseinrichtung 160, 165 oder 170 betätigt wird, um eine zugeordnete Kupplung 130, 135, 140 zu schließen. Die dritte Betätigungseinrichtung 170 ist in allen Figuren gleich dargestellt, kann aber in unterschiedlichen Ausführungsformen vorgesehen sein. Insbesondere kann die Betätigungsrichtung auch entgegengesetzt der dargestellten Richtung verlaufen. Weiter kann die Abstützung der dritten Betätigungseinrichtung 170 auch anders als dargestellt erfolgen, insbesondere in Kombination mit einer Abstützung einer der anderen Betätigungseinrichtungen 160, 165.

Zur leichteren Bezugnahme wird im Folgenden eine axiale Richtung von einem Bereich einer der Kupplungen 130 und 135 auf die dritte Kupplung 140 hin als "nach links" und in eine von der dritten Kupplung entfernte Richtung als "nach rechts" bezeichnet. Dabei wird davon ausgegangen, dass die Ausgangsseiten 120 und 125 auf der von der dritten Kupplung 140 entfernten axialen Seite liegen. Anders ausgedrückt liegen die Ausgangsseiten 120, 125 der dritten Kupplung 140 bezüglich der ersten beiden Kupplungen 130, 135 axial gegenüber. Außerdem sind zum leichteren Verständnis nicht in allen dargestellten Ausführungsformen alle Bezugszeichen eingetragen; die Bedeutungen ergeben sich leicht und eindeutig aus dem Vergleich mit anderen Ausführungsformen.

Bei der Betrachtung der Kupplungen 130 und 135 liegen in den folgenden Darstellungen exemplarisch die erste Kupplung 130 weiter links und die zweite Kupplung 135 weiter rechts. Die erste Kupplung 130 ist der ersten Betätigungseinrichtung 160 zugeordnet und stellt ein Drehmoment an der ersten Ausgangsseite 120 bereit. Die zweite Kupplung 135 ist der zweiten Betätigungseinrichtung 165 zugeordnet und stellt ein Drehmoment an der zweiten Ausgangsseite 125 bereit.

Figur 2 zeigt nicht erfindungsgemäße Ausführungsformen der Kupplungseinrichtung 100, bei denen die Betätigungsrichtungen der ersten Kupplung 130 und der zweiten Kupplung 135 axial aufeinander zu gerichtet sind.

In Figur 2A wird das Drehmoment aus den Kupplungen 130 und 135 jeweils radial nach außen ausgeleitet und nach rechts an die Ausgangsseiten 125 bzw. 125 geführt.

In Figur 2B wird das Drehmoment in entsprechender Weise, aber radial innen ausgeleitet.

In Figur 2C wird das Drehmoment beider Kupplungen 130, 135 radial nach außen ausgeleitet, axial nach links und von dort radial nach innen geführt, um zu den Ausgangsseiten 120, 125 zu gelangen.

In Figur 2D liegen die Betätigungseinrichtungen 160, 165 axial aneinander rechts neben dem Flansch 185. Die erste Betätigungseinrichtung 160 wirkt über eine axiale Umlenkung nach links auf die erste Kupplung 130.

In Figur 2E wird das Drehmoment aus der ersten Kupplung 130 radial nach außen ausgeleitet, dann axial nach links und radial nach innen übertragen. Das Drehmoment der zweiten Kupplung 135 wird einfach radial nach innen ausgeleitet.

In Figur 2F erfolgt eine umgekehrte Umlenkung, bei der das Drehmoment aus der zweiten Kupplung 135 radial nach außen ausgeleitet, dann axial nach links und radial nach innen übertragen wird, während das Drehmoment der ersten Kupplung 130 einfach radial nach innen ausgeleitet wird.

In Figur 2G wird das Drehmoment der ersten Kupplung 130 radial außen axial nach rechts und von dort radial nach innen umgeleitet. Das Drehmoment der zweiten Kupplung 135 wird einfach radial innen ausgeleitet.

In Figur 2H wird das Drehmoment der zweiten Kupplung 135 radial außen ausgeleitet, axial nach rechts umgelenkt und radial nach innen weitergeleitet. Das Drehmoment der ersten Kupplung 130 wird radial innen abgegriffen.

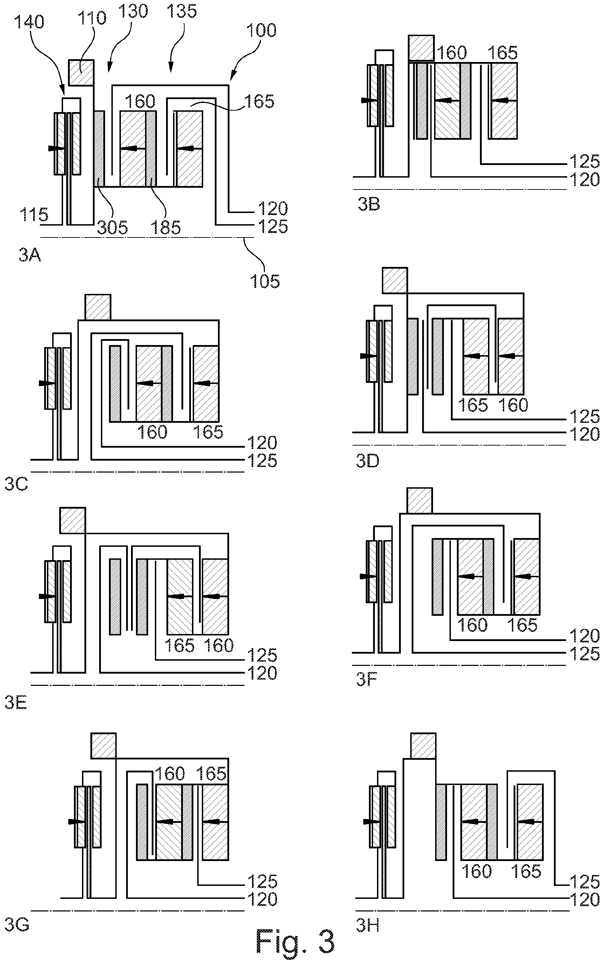

Figur 3 zeigt nicht erfindungsgemäße Ausführungsformen der Kupplungseinrichtung 100, bei denen die Betätigungsrichtungen der ersten Kupplung 130 und der zweiten Kupplung 135 axial gleichgerichtet in Richtung der dritten Kupplung 140, in der gewählten Darstellung also nach links, verlaufen.

In Figur 3A erfolgt die Drehmomentführung wie in Figur 2A, jedoch ist ein weiterer Flansch 305 vorgesehen, der als axiales Widerlager für die erste Kupplung 130 dient.

Die Ausführungsformen der Figuren 3B bis 3H entsprechen denen der Figuren 2B bis 2H, wobei jedes Mal der weitere Flansch 305 als Widerlager für die erste Kupplung 130 eingesetzt wird.

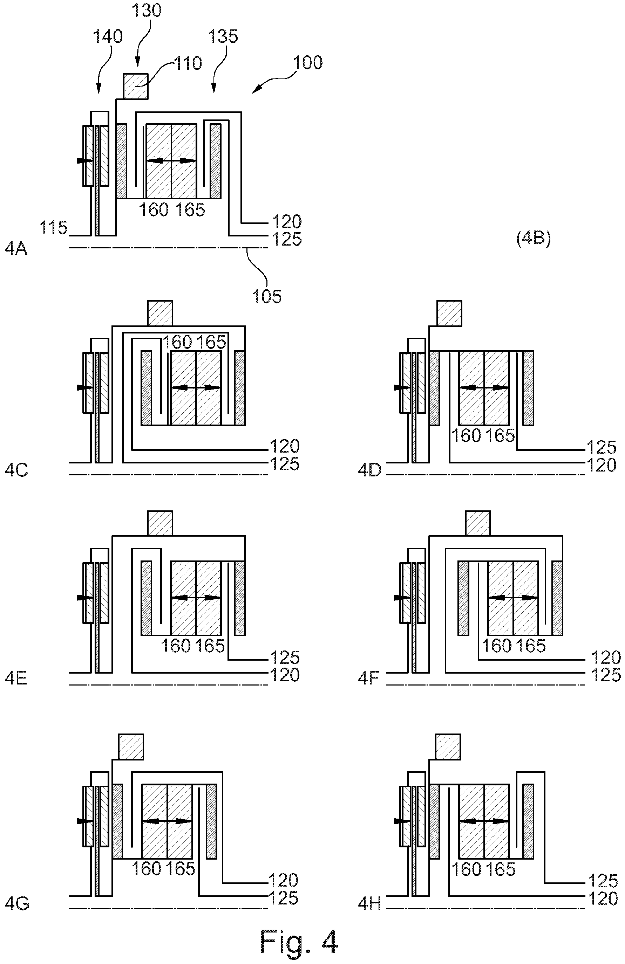

Figur 4 zeigt Ausführungsformen der Kupplungseinrichtung 100, bei denen die Betätigungsrichtungen 160, 165 der ersten Kupplung 130 und der zweiten Kupplung 135 axial auseinander verlaufen. Die Betätigungseinrichtungen 160, 165 liegen dabei bevorzugt axial aneinander an. In den dargestellten Ausführungsformen wird wieder der weitere Flansch 305 verwendet, um ein Widerlager für die erste Kupplung 130 zu bilden.

Die dargestellten Ausführungsformen entsprechen bezüglich der Übertragung des durch die Kupplungen 130, 135 bereitgestellten Drehmoments paarweise den Ausführungsformen von Figur 3, wobei zu beachten ist, dass eine Ausführungsform 4B nicht vorgesehen ist.

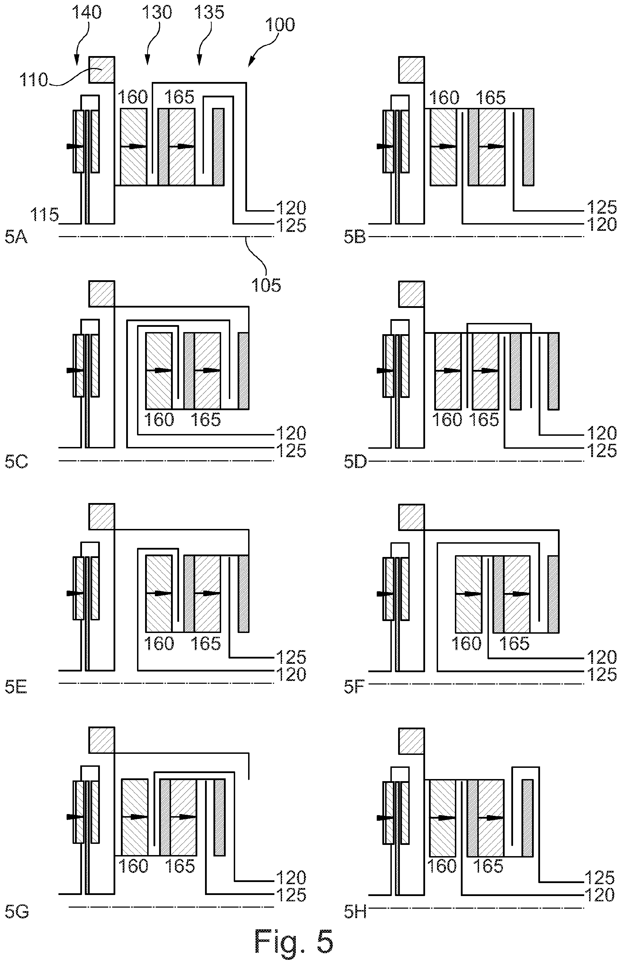

Figur 5 zeigt Ausführungsformen der Kupplungseinrichtung 100, bei denen die Betätigungsrichtungen der ersten Kupplung 130 und der zweiten Kupplung 135 axial gleichgerichtet in eine von der dritten Kupplung 140 entfernte Richtung verlaufen. In der gewählten Darstellung wirken also die Betätigungseinrichtungen 160 und 165 nach rechts. Hier wird ein weiterer Flansch 505 eingesetzt, um als axiales Widerlager für die zweite Kupplung 135 zu dienen.

Wieder entsprechen die dargestellten Ausführungsformen 5A bis 5H paarweise den Ausführungsformen 3A bis 3H, was die Führung des Drehmoments angeht, das jeweils von den Kupplungen 130, 135 bereitgestellt wird.

Durch unterschiedliche Zusammenstellungen von Komponenten bzw. Merkmalen, die oben mit Bezug auf die Figuren 2 bis 5 beschrieben wurden, kann die Kupplungseinrichtung 100 variabel an einen konkreten Einsatzzweck angepasst werden. Insbesondere kann es einfach sein, die Kupplungseinrichtung 100 in korrespondierenden Varianten mit und ohne dritte Kupplung 140 bereitzustellen. Damit kann die Kupplungseinrichtung 100 insbesondere an einem kleinen oder mittleren Kraftfahrzeug mit oder ohne elektrische Maschine 145, also bei Hybridantrieb oder klassischem Antrieb, eingesetzt werden. Die zugkraftfreie Drehmomentübertragung beim Schalten eines Getriebes kann durch die Auslegung der Kupplungseinrichtung 100 als Doppelkupplung in Verbindung mit einem Doppelgetriebe genutzt werden.

### Bezugszeichenliste

- 100: Kupplungseinrichtung
- 105: Drehachse
- 110: erste Eingangsseite
- 115: zweite Eingangsseite
- 120: erste Ausgangsseite
- 125: zweite Ausgangsseite

- 130: erste Kupplung
- 135: zweite Kupplung
- 140: dritte Kupplung

- 145: elektrische Maschine
- 150: Läufer
- 155: Ständer

- 160: erste Betätigungseinrichtung
- 165: zweite Betätigungseinrichtung
- 170: dritte Betätigungseinrichtung

- 175: Gehäuse
- 180: flüssiges Medium
- 185: Flansch

- 305: weiterer Flansch

- 505: weiterer Flansch

## Patentansprüche

1. Kupplungseinrichtung (100) mit:
einer ersten Eingangsseite (110) und einer zweiten Eingangsseite (115);
einer ersten Ausgangsseite (120) und einer zweiten Ausgangsseite (125), wobei die erste Eingangsseite (110), die zweite Eingangsseite (115) die erste Ausgangsseite (120) und die zweite Ausgangsseite (125) um eine gemeinsame Drehachse (105) drehbar sind;
einer ersten Kupplung (130) zwischen der ersten Eingangsseite (110) und der ersten Ausgangsseite (120);
einer zweiten Kupplung (135) zwischen der ersten Eingangsseite (110) und der zweiten Ausgangsseite (125); und
einer dritten Kupplung (140) zwischen der ersten Eingangsseite (110) und der zweiten Eingangsseite (115),
**dadurch gekennzeichnet, dass**
die erste Kupplung (130) und die zweite Kupplung (135) axial versetzt sind und axiale Betätigungsrichtungen für die erste Kupplung (130) und die zweite Kupplung (135) auseinander verlaufen oder gleichgerichtet in eine von der dritten Kupplung (140) entfernte Richtung verlaufen.

2. Kupplungseinrichtung (100) nach Anspruch 1, wobei die erste Kupplung (130), die zweite Kupplung (135) und die dritte Kupplung (140) in einem gemeinsamen Gehäuse (175) angeordnet sind, das teilweise mit einem flüssigen Medium (180) gefüllt ist.

3. Kupplungseinrichtung (100) nach Anspruch 1 oder 2, wobei hydraulische Betätigungseinrichtungen (160, 165, 170) zum Betätigen der ersten Kupplung (130), der zweiten Kupplung (135) und der dritten Kupplung (140) vorgesehen sind.

4. Kupplungseinrichtung (100) nach einem der Ansprüche 1 bis 3, wobei die erste Eingangsseite (110) zum Verbinden mit einem Läufer (150) einer elektrischen Maschine (145) eingerichtet ist.

5. Kupplungseinrichtung (100) nach Anspruch 4, wobei der Läufer (150) radial außen von einem Ständer (155) der elektrischen Maschine (145) umgeben ist.

6. Kupplungseinrichtung (100) nach einem Ansprüche 1 bis 4, wobei die zweite Eingangsseite (115) zum Verbinden mit einer Abtriebswelle einer Brennkraftmaschine eingerichtet ist.

## Claims

1. Clutch device (100), having:
a first input side (110) and a second input side (115) ;
a first output side (120) and a second output side (125), wherein the first input side (110), the second input side (115), the first output side (120) and the second output side (125) are rotatable about a common axis of rotation (105);
a first clutch (130) between the first input side (110) and the first output side (120);
a second clutch (135) between the first input side (110) and the second output side (125); and
a third clutch (140) between the first input side (110) and the second input side (115),
**characterized in that**
the first clutch (130) and the second clutch (135) are axially offset, and axial actuating directions for the first clutch (130) and the second clutch (135) run apart from one another or in the same direction in a direction away from the third clutch (140).

2. Clutch device (100) according to Claim 1, wherein the first clutch (130), the second clutch (135) and the third clutch (140) are arranged in a common casing (175) which is partially filled with a liquid medium (180).

3. Clutch device (100) according to Claim 1 or 2, wherein hydraulic actuating devices (160, 165, 170) are provided for actuating the first clutch (130), the second clutch (135) and the third clutch (140).

4. Clutch device (100) according to any of Claims 1 to 3, wherein the first input side (110) is designed for connection to a rotor (150) of an electric machine (145).

5. Clutch device (100) according to Claim 4, wherein the rotor (150) is surrounded radially at the outside by a stator (155) of the electric machine (145).

6. Clutch device (100) according to any of Claims 1 to 4, wherein the second input side (115) is designed for connection to an output shaft of an internal combustion engine.

## Revendications

1. Dispositif d'embrayage (100) comprenant :
un premier côté d'entrée (110) et un deuxième côté d'entrée (115) ;
un premier côté de sortie (120) et un deuxième côté de sortie (125), dans lequel
le premier côté d'entrée (110), le deuxième côté d'entrée (115), le premier côté de sortie(120) et le deuxième côté de sortie (125) peuvent tourner autour d'un axe de rotation commun (105) ;
un premier embrayage (130) entre le premier côté d'entrée (110) et le premier côté de sortie (120) ;
un deuxième embrayage (135) entre le premier côté d'entrée (110) et le deuxième côté de sortie (125) ; et
un troisième embrayage (140) entre le premier côté d'entrée (110) et le deuxième côté d'entrée (115),
**caractérisé en ce que**
le premier embrayage (130) et le deuxième embrayage (135) sont décalés axialement et les directions d'actionnement axiales pour le premier embrayage (130) et le deuxième embrayage (135) sont divergentes ou s'étendent dans le même sens dans une direction opposée au troisième embrayage (140).

2. Dispositif d'embrayage (100) selon la revendication 1, dans lequel le premier embrayage (130), le deuxième embrayage (135) et le troisième embrayage (140) sont disposés dans un carter commun (175) qui est rempli partiellement d'un milieu liquide (180).

3. Dispositif d'embrayage (100) selon la revendication 1 ou 2, dans lequel des dispositifs d'actionnement hydrauliques (160, 165, 170) sont prévus pour l'actionnement du premier embrayage (130), du deuxième embrayage (135) et du troisième embrayage (140).

4. Dispositif d'embrayage (100) selon l'une des revendications 1 à 3, dans lequel le premier côté d'entrée (110) est conçu pour être relié à un rotor (150) d'un moteur électrique (145).

5. Dispositif d'embrayage (100) selon la revendication 4, dans lequel le rotor (150) est entouré radialement vers l'extérieur par un stator (155) du moteur électrique (145) .

6. Dispositif d'embrayage (100) selon l'une des revendications 1 à 4, dans lequel le deuxième côté d'entrée (115) est conçu pour être relié à un arbre de sortie d'un moteur à combustion interne.
